Europäisches Patentamt

European Patent Office

Office européen des brevets

(19)

(11) Numéro de publication : **0 170 555 B1**

(12)

# FASCICULE DE BREVET EUROPÉEN

(45) Date de publication du fascicule du brevet :
26.04.89

(51) Int. Cl.⁴ : **A 61 C 13/225**

(21) Numéro de dépôt : **85401252.3**

(22) Date de dépôt : **24.06.85**

(54) **La selle d'appui de la prothèse dentaire mobile et partielle.**

(30) Priorité : **26.06.84 FR 8410059**

(43) Date de publication de la demande :
**05.02.86 Bulletin 86/06**

(45) Mention de la délivrance du brevet :
**26.04.89 Bulletin 89/17**

(84) Etats contractants désignés :
**AT CH DE IT LI**

(56) Documents cités :
**CH—A— 279 460**
**FR—A— 1 264 479**
**US—A— 1 370 720**
**US—A— 1 614 325**
**US—A— 2 826 814**

(73) Titulaire : **Leblond, Mirjana**
**29, rue du Gal. Galliéni**
**F-78220 Viroflay (FR)**

(72) Inventeur : **Milosevic, Bozidar**
**N. Ostrovskog 9/II**
**YU-11080 Zemun (YU)**

EP 0 170 555 B1

Jouve, 18, rue St-Denis, 75001 Paris, France

## Description

L'invention concerne une selle d'appui d'une prothèse dentaire mobile et partielle selon le préambule de la revendication 1.

Une selle d'appui est un support qui sert d'élément de liaison entre les parties fixes et mobiles de la prothèse. Elle assure la tenue et la stabilisation de la prothèse, et répartit la pression de la mastication sur les dents restantes.

Des selles d'appui de ce type sont connues du document CH-A-279 460. Selon ce document, la selle d'appui est constituée d'une partie mâle en matière plastique ou métallique se fixant aux couronnes support des dents restantes et d'une matrice qui comporte un ressort et une partie d'ancrage sur laquelle est monté un support de prothèse dentaire. La partie mâle comporte un corps qui présente une base plane, et deux côtés latéraux identiques, tous deux délimités par une même surface plane perpendiculaire à la base et dirigée vers l'intérieur de la bouche lorsque la selle est en place. Le corps présente également une rainure située entre les deux côtés latéraux et qui forme la selle proprement dite. La matrice est montée sur la partie mâle de sorte à recouvrir le corps.

La présente invention a pour but la réalisation d'une selle d'appui qui permet de :

— mieux protéger les dents porteuses de l'appareil
— assurer un meilleur confort de l'usager
— améliorer l'hygiène de la prothèse partielle Selon l'invention, ce but est atteint grâce à une selle d'appui selon la partie caractérisante de la revendication 1.

Des formes particulières de réalisation de l'invention sont décrites dans les revendications dépendantes.

L'invention est exposée plus en détail à l'aide des figures dans lesquelles :

— la figure 1 est une vue en perspective de la partie mâle ;
— la figure 2 est une vue de profil de la partie mâle ;
— la figure 3 est une vue en perspective de la matrice ;
— la figure 4 est une vue en perspective de la matrice qui montre l'ancrage du ressort ;
— la figure 5 est une vue en coupe de la matrice ;
— la figure 6 est une vue en coupe de la selle à l'état monté.

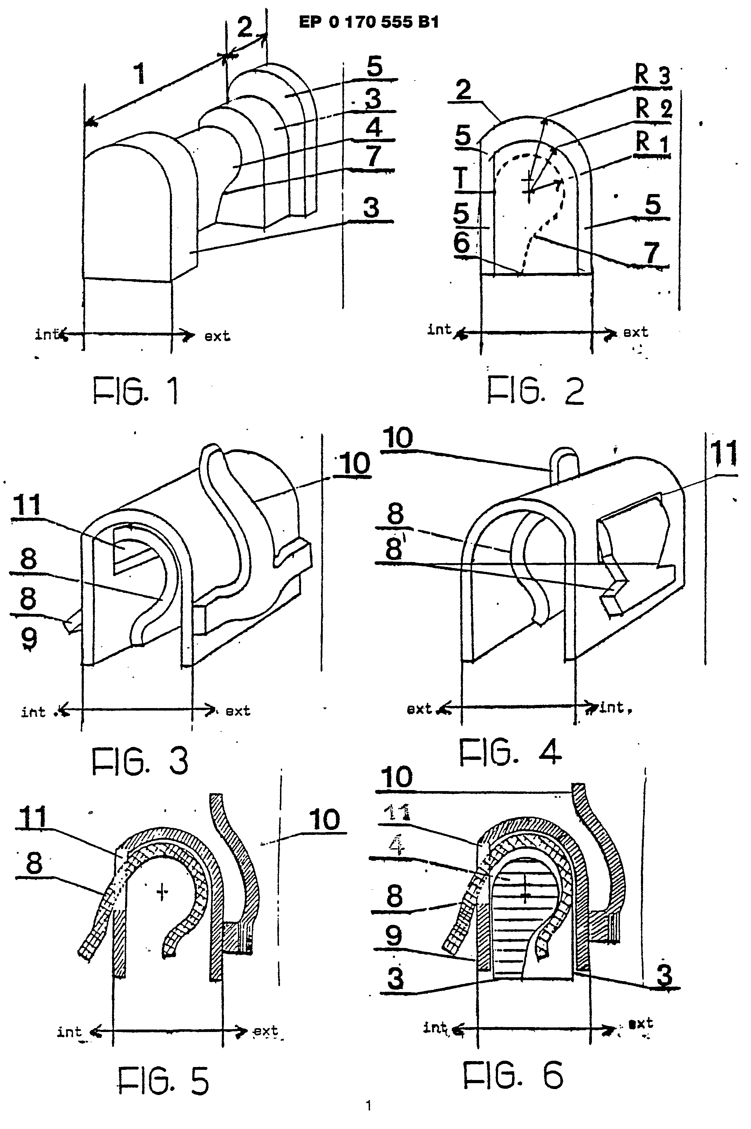

La selle d'appui de la prothèse dentaire mobile et partielle est constituée d'une partie mâle (fig. 1 et 2) et d'une matrice (fig. 3, 4, 5) en deux parties comportant un ressort (8) et une partie d'ancrage (9). Elle fait partie du groupe d'ancrages du type Dodler, Ackermann, CM (Cendres Métaux), guilmor etc..., mais elle comporte des éléments radicalement nouveaux.

La partie mâle de la selle d'appui pour la prothèse dentaire mobile et partielle est un corps métallique ou plastique qui se fixe aux couronnes supports des dents restantes, et elle appartient donc à la partie fixe de la construction. Elle comporte le corps (fig. 1, 1) et les bords de protection (fig. 1, 2).

Le corps est constitué de deux côtés latéraux (fig. 1, 3) entre lesquels se situe la selle (1, 4). Ces côtés latéraux sont égaux et parallèles. Leur section supérieure est une portion de cercle du rayon R2 (fig. 2) ; vers l'intérieur ce rayon R2 est diminué et limité par la tangente T, perpendiculaire au rayon de la selle de la partie mâle R1 (fig. 2).

La selle de la partie mâle (fig. 1, 4) est une cannelure longitudinale entre les côtés latéraux (fig. 1, 3). La partie supérieure de la selle est formée par le rayon R1 (fig. 2), alors que la partie intérieure est une surface plane limitée par la tangente T perpendiculaire au rayon R1 (fig. 2).

Du côté extérieur de la selle, la partie circulaire est quelque peu prolongée au delà de la valeur du rayon R1, et elle rejoint la base (fig. 2, 6) vers l'intérieur, avec une faible concavité (fig. 1 et 2, 7).

Le bord de protection (fig. 1 et 2, 2) appuie sur un des côtés latéraux, selon l'endroit de fixation sur la couronne porteuse. Ses côtés sont élargis de l'épaisseur du matériel de la matrice, alors que la partie circulaire supérieure l'est davantage, son élargissement incluant aussi l'épaisseur de la plaque de translation, le centre du rayon R3 (fig. 2) élevé d'autant.

La matrice (fig. 3 et 4) de la selle d'appui de la prothèse dentaire mobile et partielle avec son ressort (8) et le support de la dent artificielle (fig. 3 et 4, 10) est un recouvrement métallique formant une entité qui appartient à la partie mobile de la prothèse dentaire. Elle recouvre la partie mâle (fig. 1 et 2) appuyant sur le bord de protection (fig. 1 et 2, 5). La forme de la matrice est modelée plastiquement selon les côtés latéraux de la partie mâle (fig. 1 et 2, 3) alors que la forme du ressort (8) est définie selon la selle de la partie mâle (4).

Côté intérieur, et dans la partie supérieure de la matrice se trouve une ouverture rectangulaire (fig. 3, et suivantes, 11) par laquelle est introduit le ressort (8), qui comporte deux découpes (8) en forme de triangle dans sa partie extérieure, ou bien une découpe semi circulaire, repliée vers l'extérieur, sur sa partie médiane (non représenté), celles-ci servant de partie de retention pour le plastique (ou résine).

Montage terminé est représenté sur fig. 6.

## Revendications

1. Selle d'appui d'une prothèse dentaire mobile et partielle constituée :

d'une partie mâle en matière métallique ou plastique se fixant aux couronnes support des dents restantes et comportant un corps (1) qui présente une base plane, deux côtés latéraux (3) identiques, tous deux délimités par une même surface plane perpendiculaire à la base et dirigée vers l'intérieur de la bouche lorsque la selle est en place, et une rainure qui forme la selle (4) proprement dite et qui est située entre les deux côtés latéraux (3) :

et d'une matrice destinée à être montée sur la partie mâle de sorte à recouvrir le corps (1), et comportant un ressort (8) et une partie d'ancrage (9) sur laquelle est monté un support (10) de prothèse dentaire ; caractérisée en ce :

que la selle (4) proprement dite présente une partie supérieure de forme cylindrique d'axe parallèle à l'intersection de ladite surface plane avec ladite base que ladite forme cylindrique est tangeante à ladite surface plane, s'étend sur plus d'un demi-cylindre, et est prolongée par une partie concave de telle sorte que la largeur de la selle à sa base, mesurée perpendiculairement à ladite surface plane soit inférieure au diamètre de la partie cylindrique ;

que le ressort (8) est maintenu par la matrice et est formé de telle sorte à prendre appui sur la selle (4) proprement dite, de manière à maintenir la matrice sur la partie mâle ;

et que la partie mâle comprend un bord extérieur (2) de protection adjacent à un des côtés latéraux du corps (1), de forme et de dimension telles que lorsque la matrice est montée sur le corps (1), elle vient en appui contre le bord de protection (2).

2. Selle d'appui selon la revendication 1 caractérisée en ce que chacun des côtés latéraux (3) présente une partie supérieure de forme cylindrique de même axe et de rayon plus grand que la partie supérieure de la selle (4) proprement dite, et que cette partie cylindrique est prolongée par une partie plane parallèle à ladite surface plane.

3. Selle d'appui selon la revendication 2 caractérisée en ce que la matrice comprend une plaque métallique recourbée sur elle-même en forme de U, de sorte que la face interne de la matrice vienne en appui sur les côtés latéraux (3) du corps (1).

4. Selle d'appui selon la revendication 3 caractérisée en ce que le bord extérieur (2) de protection présente une partie supérieure de forme cylindrique dont le rayon est égal au rayon de la partie cylindrique des côtés latéraux augmenté de l'épaisseur de ladite plaque métallique, et que le bord (2) présente deux parties planes parallèles à ladite surface plane, de sorte que la surface externe de la matrice lorsqu'elle est montée sur le corps (1), affleure la surface externe du bord de protection (2).

5. Selle d'appui selon la revendication 3 ou 4 caractérisée en ce que la partie supérieure de la matrice présente une ouverture rectangulaire (11) par laquelle est introduit le ressort (8), et que le ressort (8) comporte deux découpes (8') en forme de triangle dans sa partie située à l'extérieur de la matrice en place.

**Claims**

1. Supporting seat of partial removable artificial denture comprising

an plastic or metal anchor member to be fixed on crowns of the remaining teeth and including a part (1) which has a plane base, two identical lateral sides (3) each finishing at the same plane perpendicular surface at the base and directed towards the inner side of the month when the supporting seat is in place, and a grove wich forms the supporting seat (4) and which is situated between the two lateral sides ;

a matrix to be mounted onto the anchor member in order to cover part (1), and comprising a spring (8) and a fixing point (9) upon which a denture support (10) is mounted, caracterized by :

the supporting seat (4) in its own, has cylindrical shaped upper part on a parallel axis to the intersection of the aforementioned plane surface with the aforementioned cylindrical shape is tangent to the aforementioned plane surface, spreads over more than a half cylinder and is extended by a concave part sos that the width of the supporting seat at its base, measured perpendicularly to the aforementioned plane surface is less than the diameter of the cylindrical part ;

the spring (8) is maintained by the matrix and is formed to lear on the supporting seat (4) in order to keep the matrix on the anchor member ;

the anchor member includes an outside protection edge (2) next to one of the lateral sides od the part (1) being of such shape and dimensions that when the matrix is mounted onto part (1), it will press against the protection edge (2).

2. The supporting seat according to claim 1, caracterized in that each of the lateral sides (3) present an upper part of cylindrical shape of the same axis and of a larger rayon than the upper part of the supporting seat (4), and that this cylindrical part is exteded by a small plane parallel to the aforementioned plane surface.

3. The supporting seat according to claim 2. caracterized by a matrix including a metal plate bent into a U shape so that the inside of the matrix press against the lateral sides (3) of a part (1).

4. The supporting seat according to claim 3, caracterized by the outside protection edge (2) with a cylindrical shaped upper part with a radius equal to the radius of the cylindrical part of the lateral sides, increased by the thickness of aforementioned metal plate, and with an edge (2) with two plane parts parallel to the aforementioned plane surface, so that the outside of the matrix, when mounted on part (1) brushes the outside surface of the protection edge.

5. The supporting seat according to claim 3 or 4, caracterized by a superior part presenting a rectangular opening (11) through which the spring (8) is introduced and the spring (8) having two triangular shaped edges (8') on the part placed outside of the mounted matrix.

## Patentansprüche

1. Unterlegplatte einer beweglichen Teilprothese für Zähne bestehend aus :

einem männlichen Teil aus Metall oder Plastik, der auf den Kronenträgern der restlichen Zähne aufgesetzt ist und ein Hauptstück (1) umfaßt, das eine ebene Basis aufweist, zwei gleichgroße Seitenteile (3), beide begrenzt von ein und derselben planen Fläche, senkrecht zur Basis, und zum Inneren der Öffnung/ des Mundes gerichtet, wenn die Unterlegplatte in Ausgangsstellung ist, und eine Nut, die die Unterlagsplatte (4) im eigentlichen Sinn bildet und die sich zwischen den beiden Seitenteilen (3) befindet :

und einer Matrize, die dazu bestimmt ist, auf den männlichen Teil montiert zu werden, so daß das Hauptstück (1) bedeckt ist, und eine Feder (8) und einen Verankerungsteil (9) umfaßt, auf den ein Träger/eine Auflage (10) einer Zahnprothese montiert ist ; dadurch gekennzeichnet :

daß die Unterlagsplatte (4) im eigentlichen Sinn einen oberen, zylindrischen Teil aufweist, dessen Axe parallel zum Schnittpunkt der besagten planen Fläche mit besagter Basis verläuft, daß besagte zylindrische Form besagte plane Fläche tangiert, sich auf mehr als einen Halbzylinder erstreckt und von einem konkaven Teil verlängert wird, so daß die Breite der Unterlagsplatte an ihrer Basis, senkrecht zu obgenannter Fläche gemessen, geringer ist als der Durchmesser des zylindrischen Teils ;

daß die Feder (8) von der Matrize festgehalten wird und so geformt ist, daß sie auf der Unterlagsplatte (4) im eigentlichen Sinn aufliegt, so daß sie die Matrize auf dem männlichen Teil festhält ;

und daß der männliche Teil einen äußeren Schutzrand/-umrandung (2) umfaßt, der einem der Seitenteile des Hauptstücks (1) zugekehrt ist/auf einem der... anliegt/, von einer solchen Form und solchen Dimensionen, daß, wenn die Matrize auf dem Hauptstück (1) montiert ist, sie auf dem Schutzrand (2) aufliegt.

2. Unterlegplatte gemäß Patentanspruch 1, dadurch gekennzeichnet, daß jeder Seitenteil (3) einen zylindrischen Oberteil aufweist von gleicher Achse und einem größeren Radius als der obere Teil der Unterlagsplatte (4) im eigentlichen Sinn, und daß dieser zylindrische Teil durch einen planen Teil verlängert wird, der parallel zu besagter planen Fläche verläuft.

3. Unterlegplatte gemäß Patentanspruch 2, dadurch gekennzeichnet, daß die Matrize eine Üförmig (auf sich selbst zurück-) gebogene Metallplatte umfaßt, so daß die Innenseite der Matrize gegen die Seitenteile (3) des Hauptstücks (1) abgestützt wird.

4. Unterlegplatte gemäß Patentanspruch 3, dadurch gekennzeichnet, daß der äußere Schutzrand (2) einen zylindrischen oberen Teil aufweist, dessen Radius gleich dem Radius des zylindrischen Teils der Seitenteile ist, vergrößert um die Stärke der besagten Metallplatte, und daß der Rand (2) zwei zu besagter planen Fläche parallel verlaufende plane Teile aufweist, so daß die äußere Fläche der Matrize, wenn sie auf dem Hauptstück (1) montiert ist, auf der äußeren Fläche des Schutzrandes (2) anliegt.

5. Unterlegplatte gemäß Patentanspruch 3 oder 4, dadurch gekennzeichnet, daß der obere Teil der Matrize eine rechteckige Öffnung (11) aufweist, durch die die Feder (8) eingeschoben wird, und daß die Feder (8) zwei dreieckige Schnittvorgänge (8') aufweist, in ihrem Teil, der sich außerhalb der sich in Ausgangsstellung befindlichen Matrize befindet.

EP 0 170 555 B1

FIG. 1

FIG. 2

FIG. 3

FIG. 4

FIG. 5

FIG. 6